Europäisches Patentamt

European Patent Office

Office européen des brevets

(19)

(11) Veröffentlichungsnummer : **0 147 748**
**B1**

(12) **EUROPÄISCHE PATENTSCHRIFT**

(45) Veröffentlichungstag der Patentschrift :
17.05.89

(21) Anmeldenummer : 84115469.3

(22) Anmeldetag : 14.12.84

(51) Int. Cl.⁴ : **F 16 H 21/18, B 26 B 19/28,**
**F 16 H 21/52**

(54) **Vorrichtung zur Umwandlung der Drehbewegung eines Exzenters in eine hin- und hergehende Bewegung.**

(30) Priorität : 23.12.83 DE 3346655

(43) Veröffentlichungstag der Anmeldung :
10.07.85 Patentblatt 85/28

(45) Bekanntmachung des Hinweises auf die Patenterteilung : 17.05.89 Patentblatt 89/20

(84) Benannte Vertragsstaaten :
AT CH FR GB LI NL

(56) Entgegenhaltungen :
EP–A– 0 023 690
EP–A– 0 045 107
EP–A– 0 046 580
DE–B– 2 409 592
DE–U– 8 409 239
FR–A– 2 451 251
GB–A– 919 363

(73) Patentinhaber : **Braun Aktiengesellschaft**
**Rüsselsheimer Strasse 22**
**D-6000 Frankfurt/Main (DE)**

(72) Erfinder : **Messinger, Werner**
**Schmiedeberger Strasse 18**
**D-6242 Kronberg/Ts (DE)**
Erfinder : **Tröltsch, Karl**
**Idsteiner Strasse 61**
**D-6000 Frankfurt/M. (DE)**

(74) Vertreter : **Einsele, Rolf**
**Braun Aktiengesellschaft Postfach 1120 Frankfurter**
**Strasse 145**
**D-6242 Kronberg Taunus (DE)**

**Beschreibung**

Die Erfindung bezieht sich auf eine Vorrichtung zur Umwandlung der Drehbewegung eines von einer Motorwelle angetriebenen Exzenters in eine hin- und hergehende Bewegung eines mit einem Achsbolzen gekoppelten Arbeitswerkzeuges von elektrisch angetriebenen Kleingeräten, in deren Gehäuse ein mit einem Achsbolzen versehener, doppelarmiger Hebel schwenkbar gelagert ist.

Die gattungsbildende DE-PS 2 409 592 zeigt einen Trockenrasierer mit Rotationsmotor, einem oszillierenden Untermesser und mit einem Kurbelschwingengetriebe zur Umsetzung der Drehbewegung des Motors in die oszillierende Bewegung des Untermessers, wobei die Motorwelle senkrecht zur Schwenkachse des in das Untermesser eingreifenden Schwinghebels ausgerichtet und um die Länge des Kurbelstange seitlich versetzt angeordnet ist. Die Kurbelstange ist einerseits über eine elastische kardanische Aufhängung mit dem Exzenter auf der Motorwelle und andererseits über ein Kugelgelenk mit dem Schwinghebel verbunden. Diese Art der Bewegungsübertragung ist aufwendig und fertigungstechnisch aufgrund der einzubehaltenden Toleranzen der Lager und Gelenkteile schwierig. Mehr Spiel oder Schlupf im Kugelgelenk hat zwangsläufigerweise ein Schlackern des Kugelgelenks, weniger Spiel einen erhöhten Energiebedarf zur Folge.

Aus der japanischen Auslegeschrift 57-54141 ist ein Trockenrasierapparat mit Rotationsmotor, einem oszillierenden Untermesser und einem doppelarmigen Schwinghebel bekannt, bei dem die Motorwelle des Rotationsmotors und das Lager des Schwinghebels auf einer gemeinsamen Achse liegen und der auf der Motorwelle befestigte Exzenter unmittelbar in den Schwinghebel eingreift. Um die Umsetzung der Rotationsbewegung der Motorwelle in eine oszillierende Bewegung des Schwinghebels zu erreichen, greift der Exzenterstift sowie der Lagerbolzen des Schwinghebels mit verhältnismäßig großem Spiel in entsprechende Ausnehmungen im Schwinghebel ein. Dies hat, bedingt durch den ständigen Anlagewechsel, nicht nur Klappergeräusche, sondern auch Reibungsverluste zur Folge, die sich, bei Batterie oder Akku-betriebenen Geräten, durch erhöhten Energieverbrauch auswirken.

Hinzu kommt, daß durch das große Lagerspiel zwischen dem Lagerbolzen und dem Schwinghebel das an dem Schwinghebel befestigte Untermesser von der Scherfolie wegbewegt und somit die Scherwirkung zwischen Untermesser und Scherfolie beeinträchtigt wird.

Aus dem japanischen Gebrauchsmuster 57-60788 ist ein Trockenrasierapparat mit Rotationsmotor, einem oszillierenden Untermesser und einem Kurbelschwingengetriebe zur Umsetzung der Drehbewegung des Motors in eine oszillierende Bewegung des Untermessers bekannt. Die Motorwelle ist senkrecht zur Schwenkachse des in das Untermesser eingreifenden Schwinghebels ausgerichtet und um die Länge der Kurbelstange seitlich versetzt angeordnet. Die Kurbelstange ist im Breich des Schwinghebels gabel förmig ausgebildet, wobei der Schwinghebel in diese Gabel eingreift und mittels eines Gelenkbolzens in der Gabel schwenkbar gehalten ist. Die Kurbelstange ist weiterhin über ein im Pleuelkopf vorgesehenes Exzenterlager mit der Motorwelle des Rotationsmotors verbunden. Die schwinghöhe des Schwinghebels wird über die Kurbelstange unter Inkaufnahme von Druck- und Reibungsverlusten ausgeglichen.

Aus der EP-A1-0 023 690 ist ein Schwingkörper bekannt, bestehend aus einem Winkelhebel mit etwa rechtwinklig zueinander stehenden, im wesentlichen biegesteifen Armen, einem an dem Arm mittels eines Filmscharniers schwenkbar angeformten Schwingbalken und einem an dem Arm mittels Filmscharniere angeformten Schwingkörper, der über einen Pleuelarm mit dem Exzenter gekoppelt ist. Zum Zwecke der Bewegungsumwandlung sind sowohl der Pleuelarm als auch die Leisten des Schwingkörpers biegeelastisch ausgebildet sowie der mit einem Arbeitswerkzeug zu koppelnde Schwingbalken schwenkbar am Arm des Winkelhebels mit der Mittenachse der Motorwelle fluchtend angeformt. Abgesehen von den als « im wesentlichen biegesteifen Armen » bezeichneten Teilen des Winkelhebels, benötigt diese bekannte Vorrichtung insgesamt vier Filmscharniere und drei biegeelastische Leisten um eine mit der Mittenachse der Motorwelle (19) fluchtende, geradlinig hin- und hergehende translatorische Bewegung des Schwingbalkens (22) zu erzielen.

Aufgabe der vorliegenden Erfindung ist es, eine Vorrichtung der eingangs genannten Gattung zu schaffen, bei der die Umwandlung der Drehbewegung in eine hin- und hergehende Bewegung mit geringstmöglichen Verlusten an Antriebsenergie bewerkstelligt wird. Die Vorrichtung soll eine ungehinderte Bewegung in allen geforderten Freiheitsgraden reibungsarm gewährleisten und geräuscharm arbeiten. Darüber hinaus soll die Vorrichtung so gestaltet sein, daß sowohl eine Anordnung der Motorwelle des Rotationsmotors und die Lagerung des doppelarmigen Hebels auf einer gemeinsamen Achse als auch auf versetzt zueinanderliegenden Achsen möglich ist.

Nach der Erfindung wird diese Aufgabe entsprechend dem Kennzeichen von Anspruch 1 dadurch gelöst, daß der doppelarmige Schwinghebel an seinem dem Achsbolzen gegenüberliegenden Ende eine U-förmige Ausnehmung aufweist, daß an den beiden Schenkeln der U-förmigen Ausnehmung ein Schwingkörper starr befestigt ist, daß der Schwingkörper wenigstens aus einem Steg und einem zumindest teilweise parallel zu dem Steg verlaufenden Pleuel besteht, daß der Pleuel mit einem Filmscharnier versehen ist und daß der Schwingkörper über den Pleuel und dem Exzenter mit der Motorwelle verbunden ist.

Die erfindungsgemäße Lösung zeichnet sich dadurch aus, daß zur Bewegungsumwandlung nur eine einzige Lagerstelle erforderlich ist. Sämtliche Freiheitsgrade werden über den oder über die Stege, die entweder federnd ausgebildet oder mit jeweils einem Filmscharnier versehen sind sowie über das mit einem Filmscharnier versehene Pleuel bewerkstelligt. Filmscharniere arbeiten einerseits geräuschlos und verbrauchen andererseits weniger Energie als Schwenklager.

Ein besonderer Vorteil ist in der raumsparenden Ausbildung und Anordnung der Teile der Vorrichtung zu sehen, die mehrere weitere Ausgestaltungen zuläßt, die jede für sich zusätzliche Vorteile aufweisen. Nach einer Ausführungsform besteht der Schwingkörper aus einem Pleuel mit Pleuelkopf und einem Steg, wobei der Steg an dem dem Pleuelkopf gegenüberliegenden Ende des Pleuels derart angeformt ist, daß der Stegt mit seinem freien Ende parallel zum Pleuel verläuft.

Nach einer anderen Ausführungsform besteht der Schwingkörper aus einem Pleuel mit Pleuelkopf und zwei Stegen, die parallel zueinander verlaufen und durch einen Quersteg miteinander verbunden sind, wobei an dem Quersteg zwischen den beiden Stegen, parallel zu diesen verlaufend, der Pleuel mit dem Pleuelkopf angeformt ist. Durch die parallele Rückführung des oder der Stege(s) in Richtung Pleuelkopf wird eine besonders gedrungene und raumsparende Bauform des Schwingkörpers erzielt.

In einer weiteren Ausgestaltung der Erfindung ist die Länge des Pleuels mit dem Pleuelkopf zu dem Steg bzw. den Stegen derart abgestimmt, daß im unteren Totpunkt des Schwinghebels die durch die Bohrung des Pleuels des Schwingkörpers verlaufende Mittenachse Z in vertikaler Projektion zusammenfällt mit der durch die lagerbohrung gehenden senkrechten Mittenachse Y des Schwinghebels.

Nach einer anderen Ausgestaltung der Erfindung ist die Länge des Pleuels mit dem Pleuelkopf zu dem Steg bzw. den Stegen derart abgestimmt, daß im unteren Totpunkt des Schwinghebels die durch die Bohrung im Pleuelkopf des Pleuels des Schwingkörpers verlaufende Mittenachse Z in vertikaler Projektion parallel und seitlich versetzt zu der durch die Lagerbohrung gehenden Mittenachse Y des Schwinghebels verläuft. Die Vorteile dieser Ausgestaltungen bestehen darin, daß die Motorwelle des Rotationsmotors und die Lagerung des doppelarmigen Schwinghebels auf einer gemeinsamen Achse als auch auf seitlich versetzt zueinander liegenden Achsen angeordnet werden können, je nachdem was konstruktiv erwünscht oder gefordert ist. Im erstgenannten Fall wird die Länge des Pleuels und des Steges bzw. der Stege so gewählt, daß die durch die Bohrung im Pleuelkopf gehende Mittenachse mit der Mittenachse des Schwinghebels zusammenfällt ; im letztgenannten Anwendungsfall ergibt sich das Längenverhältnis, Pleuel zu Steg bzw. Stegen aus der Achsversetzung von der Mittenachse der Motorwelle zur Mittenachse der Lagerung des Schwinghebels.

Damit der Pleuel der Exzenterbewegung des Exzenters folgen kann, ist in dem Pleuel des Schwingkörpers in einem vorgegebenen Abstand vom Pleuelkopf ein parallel zur Mittenachse Z verlaufendes Filmscharnier eingeformt.

Der aus der Schwingbewegung des Schwinghebels resultierende Höhenunterschied wird durch den Schwingkörper dadurch ausgeglichen, daß der bzw. die am doppelarmigen Schwinghebel befestigte (n) Steg (e) des Schwingkörpers federnd ausgebildet ist (sind).

Ein noch besseres Ergebnis hinsichtlich des Höhenausgleichs wird bei einer bevorzugten Ausführungsform dadurch erreicht, daß in dem Steg bzw. in den Stegen jeweils im Bereich der Befestigung an den beiden Schenkeln des Schwinghebels ein quer zur Mittenachse Z des Pleuelkopfes verlaufendes Scharnier eingeformt ist.

Weitere Merkmale, Vorteile und Einzelheiten der Erfindung ergeben sich aus der nachfolgenden Beschreibung und der Zeichnung, in denen bevorzugte Ausführungsbeispiele von Vorrichtungen zur Bewegungsumwandlung beispielsweise anhand eines Trockenrasierapparates dargestellt sind, und zwar zeigen :

Figur 1 eine Vorderansicht im Schnitt durch die Symmetrieebene eines Trockenrasierapparates im Bereich der Vorrichtung nach der Erfindung.

Figur 2 eine perspektivische Darstellung eines Schwinghebels, eines Schwingkörpers mit zwei Stegen und einem Pleuel, sowie eines Exzenters.

Figur 3 eine perspektivische Darstellung eines Schwinghebels, eines Schwingkörpers mit einem Steg und Pleuel sowie eines Exzenters.

Figur 4 eine perspektivische Darstellung eines Schwingkörpers mit drei Filmscharnieren.

Figur 5 eine Vorderansicht im Schnitt durch die Symmetrieebene eines Trockenrasierapparates im Bereich der Vorrichtung nach der Erfindung.

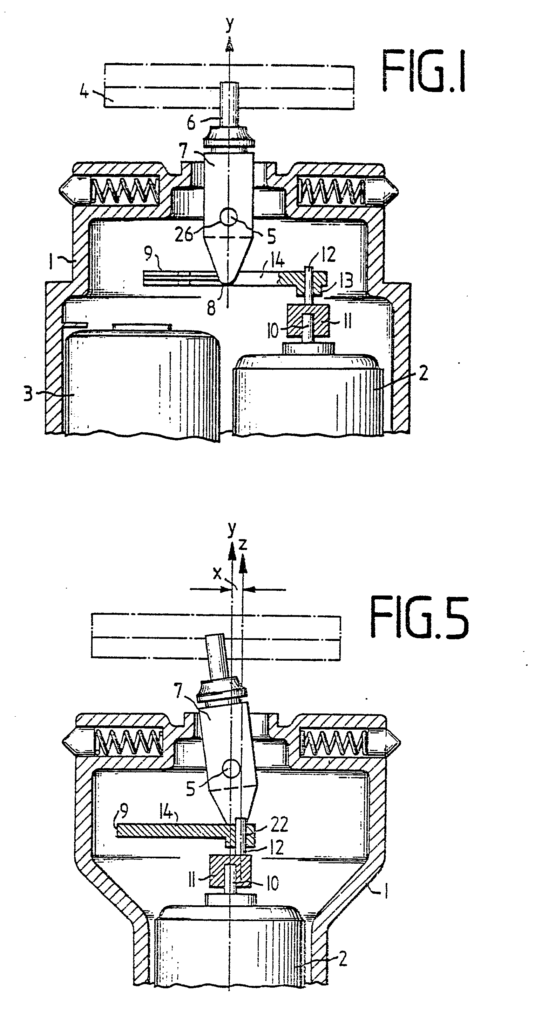

In Figur 1 ist das im Schnitt dargestellte Gehäuse eines Trockenrasierers mit 1, der Rotationsmotor mit 2, die Trockenbatterie mit 3 und das hin- und hergehende Arbeitsgerät mit 4 bezeichnet.

Die Vorrichtung zur Umwandlung der Drehbewegung des Rotationsmotors 2 in eine hin- und hergehende Bewegung des Arbeitsgerätes 4 besteht aus einem auf einer Achse 5 schwenkbar gelagerten mit einem Achsbolzen 6 versehenen doppelarmigen Schwinghebel 7, einem an dem dem Achsbolzen 6 gegenüberliegenden Schwinghebelende 8 starr befestigten Schwingkörper 9 und einem auf der Motorwelle 10 des Rotationsmotors 2 angeordneten Exzenter 11 der über einen Exzenterbolzen 12 mit dem Pleuelkopf 13 des Pleuels 14 des Schwingkörpers 9 verbunden ist.

In dem dargestellten Ausführungsbeispiel befindet sich der Schwinghebel 7 in Mittelstellung d. h. im unteren Totpunkt der von dem Schwinghebel 7 auszuführenden Schwenkbewegung. Die mit Y bezeichnete Mittenachse verläuft in vertikaler Richtung durch den Achsmittelpunkt der Lagerbohrung 26 bzw. durch den Achsmittelpunkt der aus einem Bolzen bestehenden am Gehäuse 1 angeformten Achse 5. Der Rotationsmotor 2 mit seiner Motorwelle 10 und deren Drehachse ist seitlich versetzt zur Mittenachse Y angeordnet.

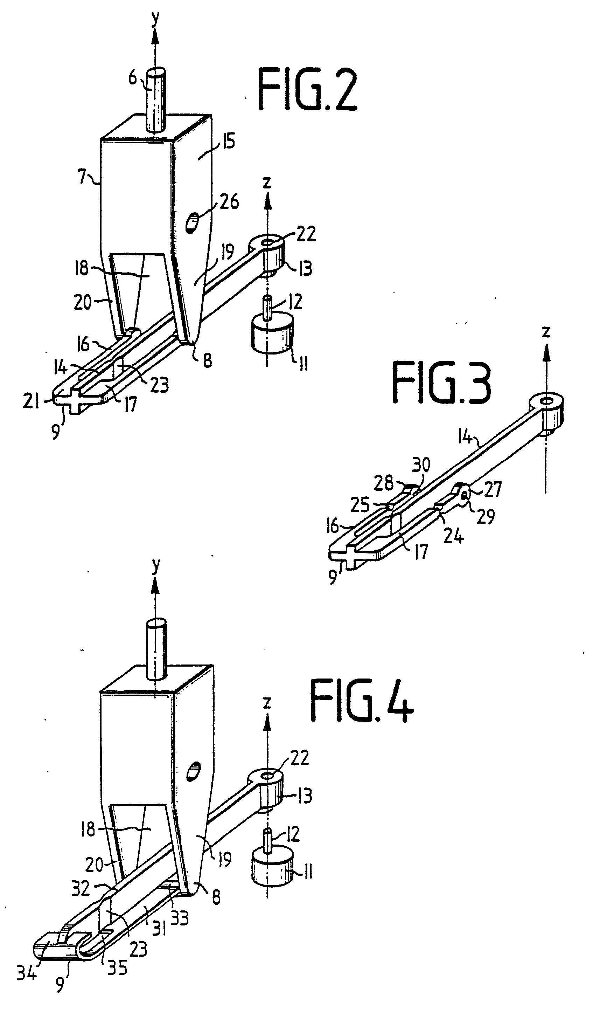

Figur 2 zeigt eine perspektivische Darstellung der Vorrichtung nach Figur 1. Die im Schwinghebel 7 vorgesehene Lagerbohrung 26 stellt die Doppelarmigkeit desselben her. Die Schwinghebelenden sind mit 8 und 15 bezeichnet, wobei in dem Schwinghebelende 15 der für die Kupplung mit einem Arbeitsgerät 4 erforderliche Achsbolzen 6 vorgesehen und im Schwinghebelende 8 eine U-förmige Ausnehmung 18 vorgesehen ist, die das Schwinghebelende 8 in zwei Schenkel 19 und 20 aufteilt.

Der Schwingkörper 9 besteht aus zwei Stegen 16 und 17 und einem zwischen diesen Stegen angeordneten Pleuel 14 mit dem Pleuelkopf 13. Die Stege 16 und 17 sowie der Pleuel 14 sind über einen Quersteg 21 miteinander verbunden. Ausgehend vom Quersteg 21 verlaufen die Stege 16 und 17 parallel zur Pleuelstange bis hin zu den Schenkeln 19 und 20, an denen sie innerhalb der U-förmigen Ausnehmung 18 jeweils starr befestigt sind, z. B. mittels einer Schweiß- oder Klebeverbindung Der durch die U-förmige Ausnehmung 18 hindurchgeführte Pleuel 14 weist in seinem Pleuelkopf 13 eine Bohrung 22, deren Mittenachse mit Z bezeichnet ist, zur Aufnahme des Exzenterbolzens 12 des Exzenters 11 auf.

Im dem Pleuel 14 ist in einem vorgegebenen Abstand zum Pleuelkopf 13, parallel zur Mittenachse Z der Bohrung 22 verlaufend, ein Filmscharnier 23 eingeformt, welches dem Pleuel 14 die erforderliche seitliche Bewegungsfreiheit verleiht. Der durch die Schwingbewegung des Schwinghebels 7 erforderliche Höhenausgleich zwischen dem Schwinghebelende 8 und dem Exzenter 11 wird über die Stege 16 und 17, die federnde Eigenschaften aufweisen, bewerkstelligt.

Ein besonders vorteilhafter Höhenausgleich zwischen dem Schwinghebelende 8 und dem Exzenter 11 wird, wie in Figur 3 veranschaulicht, dadurch erzielt, daß im Bereich der Befestigung der beiden Stege 16 und 17 an den Schenkeln 19 und 20 des Schwinghebels 7 in dem jeweiligen Steg 16, 17 ein Filmscharnier 24, 25 eingeformt ist, das quer zur Mittenachse Z der Bohrung 22 im Pleuelkopf des Pleuels 14 bzw. in Achsrichtung der Lagerbohrung 26 verläuft. An den Enden der beiden Stege 16, 17 ist jeweils ein Verbindungskopf 27, 28 mit einer Bohrung 29, 30 vorgesehen, in die, zum Zwecke einer örtlich definierten Befestigung des Schwingkörpers an den Schenkeln 19, 20, entsprechende an den Schenklen 19, 20 befindliche (nicht dargestellt) Vorsprünge eingreifen.

Figur 4 zeigt eine weitere zweckmäßige Ausführungsform eines Schwingkörpers 9, bestehend aus einem Steg 31 und einem Pleuel 32. Der Steg 31 ist mit seinem einen Ende über einen Verbindungskopf 33 in der U-förmigen Ausnehmung 18 an den unteren Enden der Schenkel 19, 20 starr befestigt, während das andere Stegende 34 halbkreisförmig ausgebildet ist, so daß der daran angeformte schmale Pleuel 32 parallel zum Steg 31 verläuft. Der Pleuel 32 ist durch die U-förmige Ausnehmung 18 hindurchgeführt bis hin zum Exzenterbolzen 12 des Exzenters 11. In dem halbkreisförmigen Stegende 24 ist zwischen dem Pleuel 32 und dem Steg 31 eine Verstärkungsrippe 35 vorgesehen, die dem Schwingkörper 9 in diesem Bereich eine bestimmte Steifigkeit verleiht und den Höhenausgleich zwischen Schwinghebelende 8 und dem Exzenter 11 über den federnden Steg 31 in den Bereich des Verbindungskopfes 33 verlegt.

Die federnde Eigenschaft des Steges 31 wird durch eine relativ dünne Wandstärke des Steges erzielt. Sieht man eine dickere Wandstärke für den Steg 31 vor, so daß dieser eine starre Eigenschaft annimmt, dann läßt sich der Höhenausgleich durch ein parallel zum Verbindungskopf 33 verlaufendes Filmscharnier bewerkstelligen. Die seitliche Bewegungsfreiheit des Pleuels 32 ist durch ein im Pleuel 32 in einem vorgegebenen Abstand zum Pleuelkopf 13 eingeformtes Filmscharnier 23 gewährleistet, das parallel zur Mittenachse Z der Bohrung 22 verläuft.

Figur 5 zeigt einen Schnitt durch das Gehäuse 1 eines Trockenrasierapparates, bei dem die Mittenachse der Motorwelle 10 des Rotationsmotors 2 in vertikaler Projektion zusammenfällt mit der durch die Mitte der Lagerbohrung 26 führenden senkrechten Mittenachse Y. Der Hub des an dem Exzenter 11 vorgesehenen Exzenterbolzens 12 um die Mittenachse Y ist mit X bezeichnet.

Der Exzenter 11 und der Schwingkörper 9 sind im Schnitt und der Schwinghebel 7 in einem Teilschnitt dargestellt, wobei der Schnitt durch den Pleuel 14 verläuft. Der dargestellte Schwingkörper 9 entspricht in seinem Aufbau und seiner Funktion dem unter Figur 3 dargestellten und beschriebenen Schwingkörper 9 mit dem Unterschied, daß die Mittenachse Z der den Exzenterbolzen 12 aufnehmenden Bohrung 22 im Pleuelkopf 13 des Pleuels 14 bei einem im unteren Totpunkt befindlichen Schwinghebel in vertikaler Richtung zusammenfällt mit der Mittenachse Y, während nach Figur 2 im unteren Totpunkt des Schwinghebels 7 die durch die Bohrung 22 gehende Mittenachse Z seitlich versetzt zur Mittenachse Y verläuft.

Die nicht sichtbaren Stege 16, 17, die jeweils mit einem Filmscharnier 25 und 24 versehen sind, und über Verbindungsköpfe 28, 29 an den unteren Enden der Schenkel 20, 19 starr befestigt sind, weisen jeweils ein Filmscharnier 25, 24 auf, die den Höhenunterschied, der sich aus der Schwenkbewegung des Schwinghebels 7 von der vertikalen Achse Y, auf der der untere Totpunkt liegt, zum oberen Totpunkt nach vollzogenem Hub X ergibt, ausgleichen.

Anstelle des Schwingkörpers nach Figur 3 kann in der Vorrichtung nach Figur 5 auch ein Schwingkörper nach Figur 4 vorgesehen werden. Bei dieser Ausführungsform wird der Schwingkörper 9 nach Figur 4 um 180° gedreht, so daß der Pleuel 32 unterhalb des Schwinghebelendes 8 verläuft. Die Befestigung des Schwingkörpers 9 wird in der U-förmigen Ausnehmung über den Verbindungskopf 33 an den Schenkeln 19, 20 starr befestigt. Die Mittenachse Z der den Exzenterbolzen 12 aufnehmende Bohrung 22 im Pleuelkopf fällt bei einem im unteren Totpunkt befindlichen Schwinghebel in vertikaler Projektion zusammen mit der Mittenachse Y und ist in horizontaler Projektion um den halben Hub X gegenüber der Mittenachse Y versetzt.

Bei allen beschriebenen Ausführungsformen verläuft die Mittenachse Y grundsätzlich durch den Achsmittelpunkt des Achsbolzens 6, und zwar dann, wenn sich der Schwinghebel 7 in seinem unteren Totpunkt befindet. Bei der Ausführungsform nach Figur 5 führt die Mittenachse Y darüber hinaus durch die Mittenachse der Motorwelle 10 des Rotationsmotors 25.

Die Länge der Pleuel 14 und 32 sowie der zugehörigen Stege 16, 17 und 31 richten sich, wie aus den Darstellungen nach den Figuren 1 und 5 ersichtlich, nach dem jeweiligen Anwendungsfall.

**Patentansprüche**

1. Vorrichtung zur Umwandlung der Drehbewegung eines von einer Motorwelle angetriebenen Exzenters (11) in eine hin- und hergehende Bewegung eines mit einem Achsbolzen (6) gekoppelten Arbeitswerkzeuges von elektrisch angetriebenen Kleingeräten, in deren Gehäuse ein mit einem Achsbolzen versehener, doppelarmiger Schwinghebel (7) schwenkbar gelagert ist, dadurch gekennzeichnet, daß der doppelarmige Schwinghebel (7) an seinem dem Achsbolzen (6) gegenüberliegenden Ende eine U-förmige Ausnehmung (18) aufweist, daß an den beiden Schenkeln (19, 20) der U-förmigen Ausnehmung (18) ein Schwingkörper (9) starr befestigt ist, daß der Schwingkörper (9) wenigstens aus einem Steg (16, 17 ; 31) und einem zumindest teilweise parallel zu dem Steg verlaufenden Pleuel (14 ; 32) mit Pleuelkopf (13) besteht, daß der Pleuel mit einem Filmscharnier (23) versehen ist und daß der Schwingkörper (9) über den Pleuel und den Exzenter (11) mit der Motorwelle (10) verbunden ist.

2. Vorrichtung nach Anspruch 1, dadurch gekennzeichnet, daß der Schwingkörper (9) nur einen Steg (31) aufweist, welcher an dem dem Pleuelkopf (13) gegenüberliegenden Ende des Pleuels (32) derart angeformt ist, daß der Steg (31) mit seinem freien Ende parallel zum Pleuel verläuft (Fig. 4).

3. Vorrichtung nach Anspruch 1, dadurch gekennzeichnet, daß zwei Stege (16, 17) parallel zueinander verlaufen und nur zwei der Stegenden durch einen Quersteg (21) miteinander verbunden sind, und daß der Pleuel (14) an dem Quersteg zwischen den beiden Stegen (16, 17) angeformt ist (Fig. 2, 3).

4. Vorrichtung nach einem oder mehreren der vorhergehenden Ansprüche, dadurch gekennzeichnet, daß die Länge des Pleuels (14, 32) mit Pleuelkopf (13) auf die Länge des Steges (31) bzw. der Stege (16, 17) derart abgestimmt ist, daß im unteren Totpunkt des Schwinghebels (7) die durch die Bohrung (22) des Pleuelkopfes (13) verlaufende Mittenachse (Z) in vertikaler Projektion zusammenfällt mit der durch die Lagerbohrung (26) gehenden Mittenachse (Y) des Schwinghebels (7).

5. Vorrichtung nach einem oder mehreren der Ansprüche 1-3, dadurch gekennzeichnet, daß die Länge des Pleuels (14, 32) mit Pleuelkopf (13) auf die Länge des Steges (31) bzw. der Stegen (16, 17) derart abgestimmt ist, daß im unteren Totpunkt des Schwinghebels (7) die durch die Bohrung (22) des Pleuelkopfes (13) verlaufende Mittenachse (Z) seitlich versetzt zu der durch die Lagerbohrung (26) gehenden Mittenachse (Y) des Schwinghebels (7) verläuft.

6. Vorrichtung nach einem oder mehreren vorhergehenden Ansprüche, dadurch gekennzeichnet, daß das Filmscharnier (23) in dem Pleuel (14 ; 32) in einem vorgegebenen Abstand zum Pleuelkopf (13) parallel zur Mittenachse (Z) verlaufend eingeformt ist.

7. Vorrichtung nach einem oder mehreren der vorhergehenden Ansprüche, dadurch gekennzeichnet, daß der Steg (31) bzw. die Stege (16, 17) des Schwingkörpers (9) federnd ausgebildet sind.

8. Vorrichtung nach einem oder mehreren der Ansprüche 1-6, dadurch gekennzeichnet, daß in dem Steg (31) bzw. in den Stegen (16, 17) jeweils im Bereich der Befestigung an beiden Schenkeln (19, 20) des Schwinghebels (7) ein quer zur Mittenachse (Z) verlaufendes Filmscharnier (24, 25) eingeformt ist.

**Claims**

1. A device for converting the rotary motion of an eccentric (11) driven by a motor shaft into a reciprocating motion of a working tool, coupled to a pin (6), of electrically powered small appliances having pivotally mounted in their housings a two-armed oscillating lever (7) provided with a pin, characterized in that the two-armed oscillating lever (7) has at its end opposite the pin (6) a U-shaped aperture (18), that a reciprocating body (9) is rigidly secured to the two arms (19, 20) of the U-shaped aperture (18), that the reciprocating body (9) comprises at least one leg (16, 17 ; 31) and a connecting rod (14 ; 32) with a connecting rod head (13), said connecting rod extending at least partly parallel to the leg, that the connecting rod is provided with a film hinge (23), and that the reciprocating body (9) is connected to the motor shaft (10) by means of the connecting rod and the eccentric (11).

2. A device as claimed in claim 1, characterized in that the reciprocating body (9) includes only one leg (31) which is formed on the end of the connecting rod (32) opposite the connecting rod head (13), such that the free end of the leg (31) extends parallel to the connecting rod (Fig. 4).

3. A device as claimed in claim 1, characterized in that two legs (16, 17) extend parallel to each other and only two of the leg ends are interconnected by a cross member (21), and that the connecting rod (14) is formed on the cross member intermediate the two legs (16, 17) (Figs. 2, 3).

4. A device as claimed in one or several of the preceding claims, characterized in that the length of the connecting rod (14, 32) including the head (13) is suited to the length of the leg (31) or the legs (16, 17) such that, with the oscillating lever (7) at bottom dead center, the center axis (Z) which extends through the bore (22) of the connecting rod head (13) coincides in vertical projection with the center axis (Y) of the oscillating lever (7), said center axis being passed through the bearing bore (26).

5. A device as claimed in one or several of the claims 1 to 3, characterized in that the length of the connecting rod (14, 32) including the head (13) is suited to the length of the leg (31) or the legs (16, 17) such that, with the oscillating lever (7) at bottom dead center, the center axis (Z) which extends through the bore (22) of the connecting rod head (13) is laterally offset relative to the center axis (Y) of the oscillating lever (7), said center axis being passed through the bearing bore (26).

6. A device as claimed in one or several of the preceding claims, characterized in that the film hinge (23) is formed in the connecting rod (14 ; 32) at a predetermined distance to the connecting rod head (13), said film hinge extending parallel to the center axis (Z).

7. A device as claimed in one or several of the preceding claims, characterized in that the leg (31) or the legs (16, 17) of the reciprocating body (9) is (are) of resilient configuration.

8. A device as claimed in one or several of the claims 1 to 6, characterized in that a respective film hinge (24, 25) extending transversely to the center axis (Z) is formed in the leg (31) or in the legs (16, 17) in the area of attachment to the two arms (19, 20) of the oscillating lever (7).

**Revendications**

1. Dispositif de conversion du mouvement de rotation d'un excentrique (11) entraîné par un arbre d'un moteur en un mouvement de va-et-vient d'un outil couplé à une broche (6), pour petits appareils entraînés électriquement dans le boîtier desquels un levier oscillant (7) à deux bras, muni d'une broche, est monté à pivotement, caractérisé par le fait que le levier oscillant à deux bras (7) présente, en son extrémité à l'opposé de la broche (6), un évidement en forme de U (18), par le fait qu'un corps oscillant (9) est rigidement fixé aux deux branches (19, 20) de l'évidement en forme de U (18), par le fait que le corps oscillant (9) est constitué par au moins une âme (16, 17 ; 31) et par une bielle (14 ; 32) dotée d'une tête (13) et au moins partiellement parallèle à l'âme ; par le fait que la bielle est munie d'une charnière à film (23) et par le fait que le corps oscillant (9) est lié à l'arbre (10) du moteur par l'intermédiaire de la bielle et de l'excentrique (11).

2. Dispositif selon revendication 1, caractérisé par le fait que le corps oscillant (9) ne présente qu'une âme (31) sur laquelle est formée celle des extrémités de la bielle (32) qui est à l'opposé de la tête de bielle (13), de manière que cette âme (31) ait son extrémité libre parallèle à la bielle (figure 4).

3. Dispositif selon revendication 1, caractérisé par le fait que deux âmes (16, 17) sont mutuellement parallèles et que seulement deux des extrémités des âmes sont reliées l'une à l'autre par une âme transversale (21), et par le fait que la bielle (14) est formée sur l'âme transversale, entre les deux âmes (16, 17) (figures 2, 3).

4. Dispositif selon une ou plusieurs des revendications précédentes, caractérisé par le fait que la longueur de la bielle (14, 32) avec tête (13) est appropriée à la longueur de l'âme (31) ou des âmes (16, 17) de manière qu'au point mort inférieur du levier oscillant (7) l'axe central (Z) du trou (22) de la tête de bielle coïncide, en projection verticale, avec l'axe médian (Y), passant par le trou de palier (26), du levier oscillant (7).

5. Dispositif selon une ou plusieurs des revendications 1 à 3, caractérisé par le fait que la longueur de la bielle (14, 32) avec tête (13) est appropriée à la longueur de l'âme (31) ou des âmes (16, 17) de manière qu'au point mort inférieur du levier oscillant (7) l'axe central (Z) du trou (22) de la tête de bielle (13) soit décalé latéralement par rapport à l'axe médian (Y), passant par le trou de palier (26), du levier oscillant (7).

6. Dispositif selon une ou plusieurs des revendications précédentes, caractérisé par le fait que la charnière à film (23) est formée dans la bielle (14 ; 32), à une distance prédéterminée de la tête de bielle (13), parallèlement à l'axe central (Z).

7. Dispositif selon une ou plusieurs des revendications précédentes, caractérisé par le fait que l'âme (31) ou les âmes (16, 17) du corps oscillant (9) sont déformables élastiquement.

8. Dispositif selon une ou plusieurs des revendications 1 à 6, caractérisé par le fait qu'une charnière à film (24, 25), transversale à l'axe central (Z), est formée dans l'âme (31) ou dans les âmes (16, 17), à chaque fois dans la région de la fixation aux deux branches (19, 20) du levier oscillant (7).

FIG.1

FIG.5

FIG.2

FIG.3

FIG.4